# EUROPEAN PATENT APPLICATION

(11) **EP 2 551 996 A2**
(43) Date of publication of application: **30.01.2013**
(21) Application number: 12168927.7
(22) Date of filing: 22.05.2012
(51) Int. Cl.: H02K 7/00

(54) **Power steering motor**

(30) Priority: 29.07.2011 KR 20110076007
(71) Applicant: LG Innotek Co., Ltd., Seoul 100-714 (KR)
(72) Inventor: Kim, Byungyoung, 100-714 SEOUL (KR)
(74) Representative: Novagraaf Technologies

(57) **Abstract**

Disclosed is an EPS motor, the EPS motor including a motor housing mounted with a stator and a rotor, a rotation shaft centrally mounted at the motor housing to rotatably support the rotor, a bearing including an outer race centrally fixed at the motor housing and an inner race having a pivot hole rotatably fixing the rotation shaft, and a shaft fixing unit formed by plastically deforming a distal end of the rotation shaft having passed the pivot hole.

## Description

### CROSS-REFERENCE TO RELATED APPLICATION

The present application is based on, and claims priority from, Korean Application Number 10-2011-0076007, filed on July 29, 2011, the disclosure of which is incorporated by reference herein in its entirety.

### BACKGROUND OF THE DISCLOSURE

### 1. Field of the Disclosure

The present disclosure relates to an EPS motor.

### 2. Discussion of the Related Art

Generally, almost every vehicle employs an electric power-assist steering system. Such an electric power-assist steering system generates an assist force based on the steering torque and the steering angle, so as to enhance the steering performance of the vehicle.

That is, a steering system that assists a steering force of a vehicle with a separate power is used to enhance the motion stability of a vehicle.

Conventionally, the auxiliary steering device uses hydraulic pressure, but an Electronic Power Steering (EPS) system adapted to transmit a rotation output of an electric motor to a steering shaft via a speed reduction mechanism has been increasingly employed these days from a viewpoint of a reduction in engine load, a reduction in weight, an enhanced steering stability and a quick restoring force.

The EPS system is such that an Electronic Control Unit (ECU) drives a motor in response to steering conditions detected by a speed sensor, a torque angle sensor and a torque sensor to enhance a steering stability and provide a quick restoring force, whereby a driver can safely steer a vehicle.

The EPS system is also such that a motor assists a torque manipulating a steering wheel to allow a driver to steer a vehicle with less power, where the motor employs a Brushless Direct Current (BLDC) motor.

The BLDC motors have been increasingly used because the brushless motors are excellent in maintenance property, have a small size, and are capable of generating a high torque.

The BLDC motor generally forms an exterior look by coupling of housing and a cover member, an inner circumferential surface of the housing is provided with a stator, and the stator is centrally formed with a rotor rotatably mounted in electrical interaction with the stator. The rotor is rotatably supported by a rotation shaft, and an upper surface of the rotation shaft is connected by a steering shaft of a vehicle to provide a power assisting the steering of the vehicle as mentioned above.

Meanwhile, the rotation shaft is rotatably supported by a bearing mounted on a floor of the housing. At this time, the rotation shaft and the bearing are such that a diameter of the rotation shaft is a bit larger than that of a pivot hole formed at an inner race of the bearing, whereby the rotation shaft is press-fitted into the pivot hole.

The assembled structure by the above constituent parts may allow various formation of levels of pull-off force required by an environment used by the EPS motor, but basically a separation prevention structure relative to an axial direction depends on an amount of press-fitting. A minimum value of an amount of press-fitting must be greater than a pull-off force, while a maximum value depends on a clearance value inside the bearing. Therefore, in case a required level of pull-off force is high, there is a limit in increasing a motor force simply by the amount of press-fitting.

### BRIEF SUMMARY

The present disclosure is directed to cope with the abovementioned problems/disadvantages and it is an object of the present disclosure to provide an EPS motor improved in structure to allow a coupling between parts of a rotation shaft and those of a bearing to be stably maintained relative to an output greater than a level of pull-off force by press-fitting.

Technical problems to be solved by the present disclosure are not restricted to the above-mentioned description, and any other technical problems not mentioned so far will be clearly appreciated from the following description by the skilled in the art.

In a general aspect of the present disclosure, there is provided an EPS motor, the EPS motor comprising: a motor housing mounted with a stator and a rotor; a rotation shaft centrally mounted at the motor housing to rotatably support the rotor; a bearing including an outer race centrally fixed at the motor housing and an inner race having a pivot hole rotatably fixing the rotation shaft; and a shaft fixing unit formed by plastically deforming a distal end of the rotation shaft having passed the pivot hole.

Preferably, but not necessarily, a plurality of shaft fixing units is formed at a circumferential surface of the distal end.

Preferably, but not necessarily, a total of three shaft fixing units is formed at the circumferential surface of the distal end, each at a predetermined gap.

Preferably, but not necessarily, the shaft fixing unit is a pressure mark formed by pressing the circumferential surface of the distal end using a caulking jig.

Preferably, but not necessarily, the shaft fixing unit forms a hitching sill relative to a direction opposite to an insertion direction of the rotation shaft by gripping the inner race of the bearing.

The EPS motor according to the present disclosure has an advantageous effect in that a rotation shaft is prevented from separating from a bearing even if a force caused by increased output amount of the rotation shaft, because an inner race of the bearing is gripped, while an exposed surface having penetrated a pivot hole of an inner race of the bearing is plastically deformed by a jig of a predetermined shape, after the rotation shaft and the bearing are press-fitted.

### BRIEF DESCRIPTION OF THE DRAWINGS

The accompanying drawings, which are included to provide further understanding of the present disclosure and are incorporated in the present disclosure and constitute a part of this application, and together with the description, serve to explain the principle of the disclosure. In the drawings:
FIGS.1 and 2 are schematic views illustrating a process of forming a pressure mark on a surface of a rotation shaft having passed a bearing using a caulking process, using a caulking jig on the rotation shaft press-fitted into the bearing coupled to a motor housing;
FIG.3 is a perspective view illustrating a shape of a caulking jig used for the processes in FIGS. 1 and 2; and
FIG.4 is a perspective view illustrating a rotation shaft formed with a pressure mark via a caulking process through the processes in FIGS.1 and 2.

### DETAILED DESCRIPTION

Advantages and features of the present invention may be understood more readily by reference to the following detailed description of exemplary embodiments and the accompanying drawings. Detailed descriptions of well-known functions, configurations or constructions are omitted for brevity and clarity so as not to obscure the description of the present disclosure with unnecessary detail. Thus, the present disclosure is not limited to the exemplary embodiments which will be described below, but may be implemented in other forms. In the drawings, the width, length, thickness, etc. of components may be exaggerated or reduced for the sake of convenience. Furthermore, throughout the descriptions, the same reference numerals will be assigned to the same elements in the explanations of the figures, and explanations that duplicate one another will be omitted.

Accordingly, the meaning of specific terms or words used in the specification and claims should not be limited to the literal or commonly employed sense, but should be construed or may be different in accordance with the intention of a user or an operator and customary usages. Therefore, the definition of the specific terms or words should be based on the contents across the specification. The terms "a" and "an" herein do not denote a limitation of quantity, but rather denote the presence of at least one of the referenced item.

As may be used herein, the terms "substantially" and "approximately" provide an industry-accepted tolerance for its corresponding term and/or relativity between items. Such an industry-accepted tolerance ranges from less than one percent to ten percent and corresponds to, but is not limited to, component values, angles, et cetera.

Now, an EPS motor according to the exemplary embodiments of the present disclosure will be described in detail with reference to the accompanying drawings.

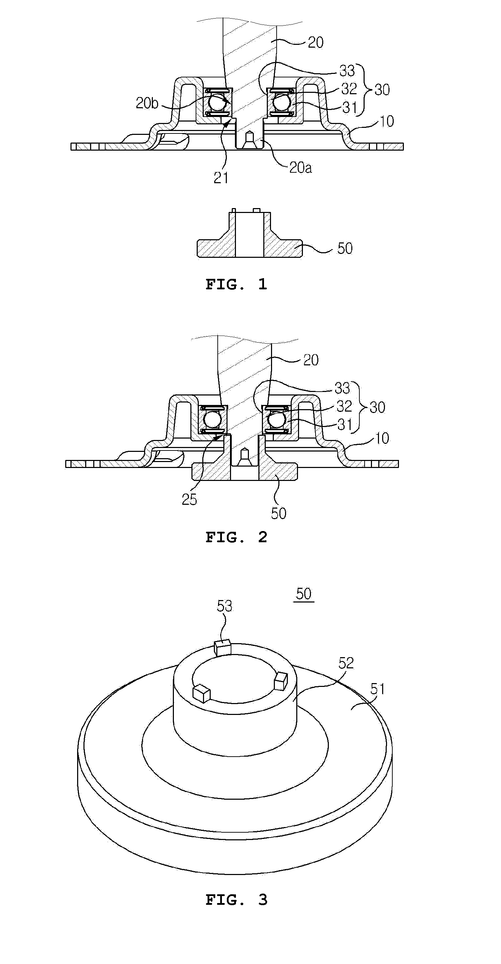

FIGS.1 and 2 are schematic views illustrating a process of forming a pressure mark on a surface of a rotation shaft having passed a bearing using a caulking process, using a caulking jig on the rotation shaft press-fitted into the bearing coupled to a motor housing.

Referring to FIGS.1 and 2, an EPS motor according to the present disclosure includes a motor housing (10) mounted with a stator and a rotor (not shown), a rotation shaft (20) and a bearing (30).

The motor housing (10) is provided in an approximately cylindrical shape, and mounted at an inner circumferential surface with a stator, where a rotor is rotatably mounted at a center of the stator. The rotation shaft (20) is press-fitted into a center of the rotor to rotate in association with rotation of the rotor by allowing both distal ends of the rotation shaft (20) to be coaxially aligned with a central axis of the motor housing (10). A distal end of rotation shaft (20) is formed with a gear unit (20a) for transmitting power.

The bearing (30) serves to rotatably support the rotation shaft (20), an outer race (31) of which is press-fitted into a distal end of one side of the rotor housing (10), and an inner race (32) of which is press-fitted into the rotation shaft (20).

Meanwhile, the inner race (32) is centrally provided with a pivot hole (33) into which the rotation shaft (20) is press-fitted. A diameter of the pivot hole (33) corresponds to that of a bearing support unit (20b) provided on the rotation shaft (20), where the diameter of the pivot hole (33) may be a bit smaller than that of that of the bearing support unit (20b).

In a case the rotation shaft (20) is press-fitted into the pivot hole (33), the rotation shaft (20) is prevented from being axially disengaged by press-fitted force between the bearing support unit (20b) and the pivot hole (33).

Now, referring to FIGS. 1 and 2 again, a distal end (21) of the rotation shaft (20) press-fitted into the inner race (32) of the bearing (30) is formed with a plurality of shaft fixing units (25) using a caulking jig (50).

The caulking jig (50), as illustrated in FIG.3, includes a first barrel unit (51) forming a jig body and being connected to pressing means such as a press, a second barrel unit (52) having a diameter smaller than that of the first barrel unit (51), and a caulking lug (53) protrusively formed at a distal end of the second barrel unit (52).

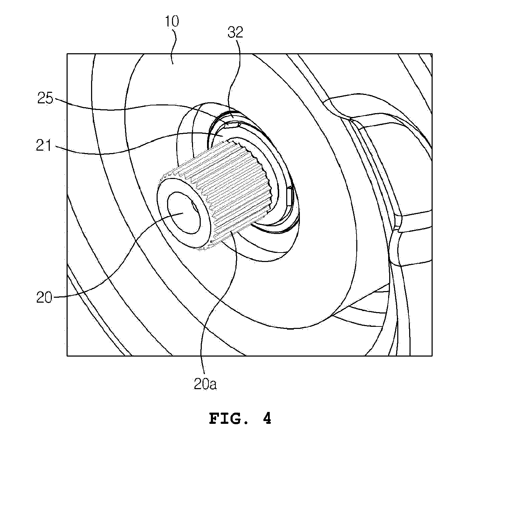

The caulking lug (53) serves to concentrate pressure applied to the first and second barrel units (51, 52) to form a caulking lug-shaped pressure mark on the distal end (21). The number of caulking lugs (53) may be increased or decreased as the need arises. According to an exemplary embodiment of the present disclosure, three caulking lugs (53) are preferred, where each caulking lug (53) is preferably formed at an equidistant gap. As the number of caulking lugs (53) is increased, more number of shaft fixing units (25) may be formed on the rotation shaft (20). However, an excessive number of shaft fixing units (25) may exercise a burden to the rotation shaft (20), such that three or four shaft fixing units (25) are preferred. Meanwhile, as illustrated in FIG.4, the distal end (21) is a portion of the rotation shaft (20) exposed by passing through the pivot hole (33), and is provided in a form of a cylindrical sill unit having a diameter smaller than that of the gear unit (20a). The distal end (21) passes the pivot hole (33) formed at the inner race (32) to be exposed without any interference with the inner race (32).

In a case the distal end (21) is formed with the caulking-shaped pressure mark using the caulking jig (50), the shaft fixing unit (25) formed in the shape of a pressure mark may be formed on a same position as that of the caulking lug (53) on the distal end (21), as illustrated in FIG.4.

In a case the shaft fixing unit (25) is formed at the distal end (21) of the rotation shaft (20), the shaft fixing unit (25) grips the inner race (32) of the bearing (30) to form a sill relative to a direction opposite to an insertion direction of the rotation shaft (20), whereby the rotation shaft (20) is prevented from being disengaged from the bearing (30).

Therefore, an erroneous operation or failure of the EPS motor caused by disengagement of the rotation shaft (20) from the bearing (30) can be prevented, even if EPS motor force is increased to increase a turning effect of an instantaneous torque.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims.

## Claims

1. An EPS motor, the EPS motor comprising:
a motor housing mounted with a stator and a rotor;
a rotation shaft centrally mounted at the motor housing to rotatably support the rotor;
a bearing including an outer race centrally fixed at the motor housing and an inner race having a pivot hole rotatably fixing the rotation shaft; and
a shaft fixing unit formed by plastically deforming a distal end of the rotation shaft having passed the pivot hole.

2. The EPS motor of claim 1, wherein a plurality of shaft fixing units is formed at a circumferential surface of the distal end.

3. The EPS motor of claim 2, wherein a total of three shaft fixing units is formed at the circumferential surface of the distal end, each at a predetermined gap.

4. The EPS motor of claim 3, wherein the shaft fixing unit is a pressure mark formed by pressing the circumferential surface of the distal end using a caulking jig.

5. The EPS motor of claim 4, wherein the shaft fixing unit forms a hitching sill relative to a direction opposite to an insertion direction of the rotation shaft by gripping the inner race of the bearing.
